(19) Europäisches Patentamt
European Patent Office
Office européen des brevets

(11) **EP 4 068 835 B1**

(12) **EUROPEAN PATENT SPECIFICATION**

(45) Date of publication and mention
of the grant of the patent:
**10.09.2025   Bulletin 2025/37**

(21) Application number: **22162938.9**

(22) Date of filing: **18.03.2022**

(51) International Patent Classification (IPC):
*H04W 24/00* (2009.01)

(52) Cooperative Patent Classification (CPC):
**H04W 24/00**

(54) **IMPROVING MEASUREMENT PERFORMANCE**

VERBESSERN DER MESSLEISTUNG

AMÉLIORATION DES PERFORMANCES DE MESURE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:   **01.04.2021   US 202163169311 P**

(43) Date of publication of application:
**05.10.2022   Bulletin 2022/40**

(73) Proprietor: **Nokia Technologies Oy
02610 Espoo (FI)**

(72) Inventors:
• **KAIKKONEN, Jorma Johannes
90800 Oulu (FI)**
• **LASELVA, Daniela
9270 Klarup (DK)**
• **DALSGAARD, Lars
90230 Oulu (FI)**

(74) Representative: **Nokia EPO representatives
Nokia Technologies Oy
Karakaari 7
02610 Espoo (FI)**

(56) References cited:
**US-A1- 2019 349 797**

• HUAWEI ET AL: "Correction on Psharingfactor",
vol. RAN WG4, no. Online Meeting ;20200420 -
20200501, 4 May 2020 (2020-05-04),
XP051880632, Retrieved from the Internet
<URL:https://ftp.3gpp.org/tsg_ran/WG4_Radio/
TSGR4_94_eBis/Docs/R4-2005835.zip
R4-2005835 revised CR on Correction on
Psharingfactor.docx> [retrieved on 20200504]
• QUALCOMM INCORPORATED: "Discussion on
open issues in WUS RRM in NB-IoT", vol. RAN
WG4, no. Busan, South Korea; 20180521 -
20180525, 20 May 2018 (2018-05-20),
XP051446497, Retrieved from the Internet
<URL:http://www.3gpp.org/ftp/Meetings%
5F3GPP%5FSYNC/RAN4/Docs/> [retrieved on
20180520]

**Description**

TECHNICAL FIELD

Various example embodiments relate generally to radio measurements, such as radio link monitoring.

BACKGROUND

It is possible to apply relaxation in e.g. radio link monitoring and beam failure detection requirements at certain circumstances, e.g. for a user equipment (UE) having low mobility. This may provide savings in power consumption with the compromise of having a longer evaluation period. However, current rules on whether to relax the measurements are not optimal and there is a room for improvement.

Documents US2019349797 and R4-2005835 provide background information for measurements.

SUMMARY

According to some aspects, there is provided the subject matter of the independent claims. Some further aspects are defined in the dependent claims.

LIST OF THE DRAWINGS

In the following, the invention will be described in greater detail with reference to the embodiments and the accompanying drawings, in which

Figure 1 presents an example network in which the embodiments are applicable;
Figures 2A-2C show different settings for measurement configurations, according to some embodiments;
Figure 3 shows an illustration of an example RLM procedure;
Figure 4 illustrates a method according to an embodiment;
Figures 5A-5C show illustrations of how different P values affect different measurement configurations, according to some embodiments;
Figure 6 depicts a signaling flow diagram, according to an embodiment; and
Figures 7 and 8 illustrate apparatuses, according to some embodiments.

DESCRIPTION OF EMBODIMENTS

The following embodiments are exemplary. Although the specification may refer to "an", "one", or "some" embodiment(s) in several locations of the text, this does not necessarily mean that each reference is made to the same embodiment(s), or that a particular feature only applies to a single embodiment. Single features of different embodiments may also be combined to provide other embodiments. For the purposes of the present disclosure, the phrases "A or B" and "A and/or B" means (A), (B), or (A and B). For the purposes of the present disclosure, the phrase "A, B, and/or C" means (A), (B), (C), (A and B), (A and C), (B and C), or (A, B, and C).

Embodiments described may be implemented in a radio system, such as one comprising at least one of the following radio access technologies (RATs): Worldwide Interoperability for Micro-wave Access (WiMAX), Global System for Mobile communications (GSM, 2G), GSM EDGE radio access Network (GERAN), General Packet Radio Service (GRPS), Universal Mobile Telecommunication System (UMTS, 3G) based on basic wide-band-code division multiple access (W-CDMA), high-speed packet access (HSPA), Long Term Evolution (LTE), LTE-Advanced, and enhanced LTE (eLTE). Term 'eLTE' here denotes the LTE evolution that connects to a 5G core. LTE is also known as evolved UMTS terrestrial radio access (EUTRA) or as evolved UMTS terrestrial radio access network (EUTRAN). A term "resource" may refer to radio resources, such as a physical resource block (PRB), a radio frame, a subframe, a time slot, a subband, a frequency region, a subcarrier, a beam, etc. The term "transmission" and/or "reception" may refer to wirelessly transmitting and/or receiving via a wireless propagation channel on radio resources

The embodiments are not, however, restricted to the systems/RATs given as an example but a person skilled in the art may apply the solution to other communication systems provided with necessary properties. One example of a suitable communications system is the 5G system or a system beyond the 5G system. The 3GPP solution to 5G is referred to as New Radio (NR). 5G has been envisaged to use multiple-input-multiple-output (MIMO) multi-antenna transmission techniques, more base stations or nodes than the current network deployments of LTE (a so-called small cell concept), including macro sites operating in co-operation with smaller local area access nodes and perhaps also employing a variety of radio technologies for better coverage and enhanced data rates. 5G will likely be comprised of more than one radio access technology / radio access network (RAT/RAN), each optimized for certain use cases and/or spectrum. 5G mobile communications may have a wider range of use cases and related applications including video streaming, augmented reality, different ways of data sharing and various forms of machine type applications, including vehicular safety, different sensors and real-time control. 5G is expected to have multiple radio interfaces, namely below 6GHz, cmWave and mmWave, and being integrable with existing legacy radio access technologies, such as the LTE.

The current architecture in LTE networks is distributed in the radio and centralized in the core network. The low latency applications and services in 5G require to bring the content close to the radio which leads to local break out and multi-access edge computing (MEC). 5G enables analytics and knowledge generation to occur at the source of the data. This approach requires leveraging resources that may not be continuously connected to a network such as laptops, smartphones, tablets and sensors. MEC provides a distributed computing environment for application and service hosting. It also has the ability to store and process content in close proximity to cellular subscribers for faster response time. Edge computing covers a wide range of technologies such as wireless sensor networks, mobile data acquisition, mobile signature analysis, cooperative distributed peer-to-peer ad hoc networking and processing also classifiable as local cloud/fog computing and grid/mesh computing, dew computing, mobile edge computing, cloudlet, distributed data storage and retrieval, autonomic self-healing networks, remote cloud services, augmented and virtual reality, data caching, Internet of Things (massive connectivity and/or latency critical), critical communications (autonomous vehicles, traffic safety, real-time analytics, time-critical control, healthcare applications). Edge cloud may be brought into RAN by utilizing network function virtualization (NVF) and software defined networking (SDN). Using edge cloud may mean access node operations to be carried out, at least partly, in a server, host or node operationally coupled to a remote radio head or base station comprising radio parts. Network slicing allows multiple virtual networks to be created on top of a common shared physical infrastructure. The virtual networks are then customised to meet the specific needs of applications, services, devices, customers or operators.

In radio communications, node operations may in be carried out, at least partly, in a central/centralized unit, CU, (e.g. server, host or node) operationally coupled to distributed unit, DU, (e.g. a radio head/node). It is also possible that node operations will be distributed among a plurality of servers, nodes or hosts. It should also be understood that the distribution of labour between core network operations and base station operations may vary depending on implementation. Thus, 5G networks architecture may be based on a so-called CU-DU split. One gNB-CU controls several gNB-DUs. The term 'gNB' may correspond in 5G to the eNB in LTE. The gNBs (one or more) may communicate with one or more UEs. The gNB-CU (central node) may control a plurality of spatially separated gNB-DUs, acting at least as transmit/receive (Tx/Rx) nodes. In some embodiments, however, the gNB-DUs (also called DU) may comprise e.g. a radio link control (RLC), medium access control (MAC) layer and a physical (PHY) layer, whereas the gNB-CU (also called a CU) may comprise the layers above RLC layer, such as a packet data convergence protocol (PDCP) layer, a radio resource control (RRC) and an internet protocol (IP) layers. Other functional splits are possible too. It is considered that skilled person is familiar with the OSI model and the functionalities within each layer.

In an embodiment, the server or CU may generate a virtual network through which the server communicates with the radio node. In general, virtual networking may involve a process of combining hardware and software network resources and network functionality into a single, software-based administrative entity, a virtual network. Such virtual network may provide flexible distribution of operations between the server and the radio head/node. In practice, any digital signal processing task may be performed in either the CU or the DU and the boundary where the responsibility is shifted between the CU and the DU may be selected according to implementation.

Some other technology advancements probably to be used are Software-Defined Networking (SDN), Big Data, and all-IP, to mention only a few non-limiting examples. For example, network slicing may be a form of virtual network architecture using the same principles behind software defined networking (SDN) and network functions virtualisation (NFV) in fixed networks. SDN and NFV may deliver greater network flexibility by allowing traditional network architectures to be partitioned into virtual elements that can be linked (also through software). Network slicing allows multiple virtual networks to be created on top of a common shared physical infrastructure. The virtual networks are then customised to meet the specific needs of applications, services, devices, customers or operators.

The plurality of gNBs (access points/nodes), each comprising the CU and one or more DUs, may be connected to each other via the Xn interface over which the gNBs may negotiate. The gNBs may also be connected over next generation (NG) interfaces to a 5G core network (5GC), which may be a 5G equivalent for the core network of LTE. Such 5G CU-DU split architecture may be implemented using cloud/server so that the CU having higher layers locates in the cloud and the DU is closer to or comprises actual radio and antenna unit. There are similar plans ongoing for LTE/LTE-A/eLTE as well. When both eLTE and 5G will use similar architecture in a same cloud hardware (HW), the next step may be to combine software (SW) so that one common SW controls both radio access networks/technologies (RAN/RAT). This may allow then new ways to control radio resources of both RANs. Furthermore, it may be possible to have configurations where the full protocol stack is controlled by the same HW and handled by the same radio unit as the CU.

It should also be understood that the distribution of labour between core net-work operations and base station operations may differ from that of the LTE or even be non-existent. Some other technology advancements probably to be used are Big Data and all-IP, which may change the way networks are being constructed and managed. 5G (or new radio, NR) networks are being designed to support multiple hierarchies, where MEC servers can be placed between the core and the base station or nodeB (gNB). It should be appreciated that MEC can be applied in 4G networks as well.

5G may also utilize satellite communication to enhance or complement the coverage of 5G service, for example by providing backhauling. Possible use cases are providing service continuity for machine-to-machine (M2M) or Internet of Things (IoT) devices or for passengers on board of vehicles, or ensuring service availability for critical communications, and future rail-way/maritime/aeronautical communications. Satellite communication may utilize geostationary earth orbit (GEO) satellite systems, but also low earth orbit (LEO) satellite systems, in particular mega-constellations (systems in which hundreds of (nano)satellites are deployed). Each satellite in the mega-constellation may cover several satellite-enabled network entities that create on-ground cells. The on-ground cells may be created through an on-ground relay node or by a gNB located on-ground or in a satellite.

The embodiments may be also applicable to narrow-band (NB) Internet-of-things (IoT) systems which may enable a wide range of devices and services to be connected using cellular telecommunications bands. NB-IoT is a narrowband radio technology designed for the Internet of Things (IoT) and is one of technologies standardized by the 3rd Generation Partnership Project (3GPP). Other 3GPP IoT technologies also suitable to implement the embodiments include machine type communication (MTC) and eMTC (enhanced Machine-Type Communication). NB-IoT focuses specifically on low cost, long battery life, and enabling a large number of connected devices. The NB-IoT technology is deployed "in-band" in spectrum allocated to Long Term Evolution (LTE) - using resource blocks within a normal LTE carrier, or in the unused resource blocks within a LTE carrier's guard-band - or "standalone" for deployments in dedicated spectrum.

The embodiments may be also applicable to device-to-device (D2D), machine-to-machine, peer-to-peer (P2P) communications. The embodiments may be also applicable to vehicle-to-vehicle (V2V), vehicle-to-infrastructure (V2I), infrastructure-to-vehicle (I2V), or in general to V2X or X2V communications.

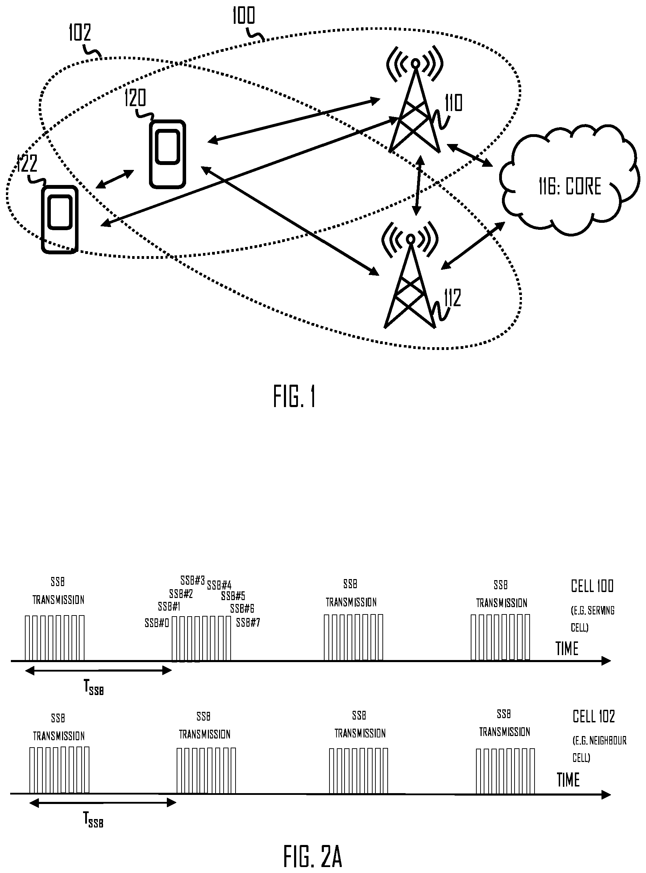

Figure 1 illustrates an example of a communication system to which embodiments of the invention may be applied. The system may comprise a control node 110 providing one or more cells, such as cell 100, and a control node 112 providing one or more other cells, such as cell 102. Each cell may be, e.g., a macro cell, a micro cell, femto, or a pico cell, for example. In another point of view, the cell may define a coverage area or a service area of the corresponding access node. The control node 110, 112 may be an evolved Node B (eNB) as in the LTE and LTE-A, ng-eNB as in eLTE, gNB of 5G, or any other apparatus capable of controlling radio communication and managing radio resources within a cell. The control node 110, 112 may be called a base station, network node, or an access node.

The system may be a cellular communication system composed of a radio access network of access nodes, each controlling a respective cell or cells. The access node 110 may provide user equipment (UE) 120 (one or more UEs) with wireless access to other networks such as the Internet. The wireless access may comprise downlink (DL) communication from the control node to the UE 120 and uplink (UL) communication from the UE 120 to the control node.

Additionally, although not shown, one or more local area access nodes may be arranged such that a cell provided by the local area access node at least partially overlaps the cell of the access node 110 and/or 112. The local area access node may provide wireless access within a sub-cell. Examples of the sub-cell may include a micro, pico and/or femto cell. Typically, the sub-cell provides a hot spot within a macro cell. The operation of the local area access node may be controlled by an access node under whose control area the sub-cell is provided. In general, the control node for the small cell may be likewise called a base station, network node, or an access node.

There may be a plurality of UEs 120, 122 in the system. Each of them may be served by the same or by different control nodes 110, 112. The UEs 120, 122 may communicate with each other, in case D2D communication interface is established between them.

The term "terminal device" or "UE" refers to any end device that may be capable of wireless communication. By way of example rather than limitation, a terminal device may also be referred to as a communication device, user equipment (UE), a Subscriber Station (SS), a Portable Subscriber Station, a Mobile Station (MS), or an Access Terminal (AT). The terminal device may include, but not limited to, a mobile phone, a cellular phone, a smart phone, voice over IP (VoIP) phones, wireless local loop phones, a tablet, a wearable terminal device, a personal digital assistant (PDA), portable computers, desktop computer, image capture terminal devices such as digital cameras, gaming terminal devices, music storage and playback appliances, vehicle-mounted wireless terminal devices, wireless endpoints, mobile stations, laptop-embedded equipment (LEE), laptop-mounted equipment (LME), USB dongles, smart devices, wireless customer-premises equipment (CPE), an Internet of Things (IoT) device, a watch or other wearable, a head-mounted display (HMD), a vehicle, a drone, a medical device and applications (e.g., remote surgery), an industrial device and applications (e.g., a robot and/or other wireless devices operating in an industrial and/or an automated processing chain contexts), a consumer electronics device, a device operating on commercial and/or industrial wireless networks, and the like. In the following description, the terms "terminal device", "communication device", "terminal", "user equipment" and "UE" may be used interchangeably.

In the case of multiple access nodes in the communication network, the access nodes may be connected to each other with an interface. LTE specifications call such an interface as X2 interface. For IEEE 802.11 network (i.e. wireless local area network, WLAN, WiFi), a similar interface Xw may be provided between access points. An interface between an eLTE access point and a 5G access point, or between two 5G access points may be called Xn. Other communication methods between the access nodes may also be possible. The access nodes 110 and 112 may be further connected via another interface to a core network 116 of the cellular communication system. The LTE specifications specify the core network as an evolved packet core (EPC), and the core network may comprise a mobility management entity (MME) and a gateway node. The MME may handle mobility of terminal devices in a tracking area encompassing a plurality of cells and handle signalling connections between the terminal devices and the core network. The gateway node may handle data routing in the core network and to/from the terminal devices. The 5G specifications specify the core network as a 5G core (5GC), and there the core network may comprise e.g. an access and mobility management function (AMF) and a user plane function/gateway (UPF), to mention only a few. The AMF may handle termination of non-access stratum (NAS) signalling, NAS ciphering & integrity protection, registration management, connection management, mobility management, access authentication and authorization, security context management. The UPF node may support packet routing & forwarding, packet inspection and QoS handling, for example.

In radio resource control (RRC) connected mode, the UE is expected to continuously monitor the serving cell radio-link quality in order to evaluate whether the downlink radio link quality on the configured radio link monitoring reference signal (RLM-RS) resource estimated over a given evaluation period become worse than a threshold. This procedure is referred to radio link monitoring (RLM). The purpose of RLM measurements and the corresponding procedure is to evaluate the serving cell radio link quality to ensure that the downlink (DL) radio quality is sufficient for keeping the link, and to indicate to higher layers when the quality of the link is going below the defined threshold.

Hence such indications should provide a warning when it is expected that the link no longer provides a good enough quality for the data transmission. The lower layers of the UE have to indicate to higher layers of the UE when the signal quality (e.g. based on the current estimated BLER level e.g. of the physical downlink control channel (PDCCH) transmissions) is below a threshold, Qout, in which case the UE sends an out-of-sync indication (OOS) to upper layers. The UE has to send an OOS indication when all the monitored RLM-RS(s) are below a threshold, i.e. all the RLM-RS(s) configured for RLM purposes are below the threshold within the evaluation period for out-of-sync.

The reference signals used for RLM (i.e. RLM-RSs) can be either a reference signal carried in a synchronization signal block (SSB) (e.g. the resource elements that carry secondary synchronization signals included in the SSB) or a channel state information RS (CSI-RS). The UE can be configured to measure up to 2, 4 or 8 RLM-RSs, depending on the frequency range (FR1 below 3GHz, FR1 above 3 GHz or FR2). If bad channel conditions persist, after a number of OOS indications (N310 counter), the UE will start a timer (T310 timer) and declare a radio link failure (RLF) if the signal quality does not improve until the timer expires. However, if before the timer expires the channel conditions are improved, the UE will compare the radio link quality with a second threshold Qin and send an in-sync (IS) indication to higher layers, if the link quality is above it. An IS indication is sent if at least one RLM-RS is above the threshold Qin within the evaluation period for in-sync.

If a number of IS indications (N311 counter) are sent before the T310 timer expires, the UE will reset the N310 counter and T310 timer, and will not declare RLF. It is noted that, in good radio conditions, the UE will not send any OOS indication to higher layers, despite it is constantly measuring the quality of the radio channel.

The requirements that define the UE measurements for RLM are based on the radio link monitoring reference signal (RLM-RS) periodicity (either $T_{SSB}$, which is the periodicity of the SSB configured for RLM or $T_{CSI-RS}$, which is the periodicity of the CSI-RS resource configured for RLM), and/or in terms of the discontinuous reception (DRX) periodicity ($T_{DRX}$, which is the DRX cycle length).

Figure 2A shows an example SSB configuration in NR. The Figure shows eight transmitted SSB beams in both cells 100 and 102. However, it should be noted that the number of SSBs configured can be different per cell. The Figure assumes SSB-based RLM, but similar figure could be drawn for CSI-RS based RLM. In general, even though description uses SSB-based RLM/BFD as an example, the embodiments are applicable also to CSI-RS based RLM/BFD. $T_{SSB}$ can be set to e.g. 5, 10, 20, 40, or 160 ms, for example, and it can be different in different cells. Although shown in the Figures 2A-2C that the time-lines for two cells and SSB transmissions are synchronized, this is not a necessary condition but asynchronous SSB transmissions from different cells are possible as well.

The requirements for SSB-based RLM are defined in below tables for FR1 and FR2. Similar requirements may be defined for CSI-RS-based RLM.

**Evaluation period $T_{Evaluate\ out\ SSB}$ and $T_{evaluate\ in\ SSB}$ for FR1**

| Configuration | $T_{Evaluate\ out\ SSB}$ (ms) | $T_{Evaluate\_in\_SSB}$ (ms) |
|---|---|---|
| no DRX | Max(200, Ceil(10 × P) × $T_{SSB}$) | Max(100, Ceil(5 × P) × $T_{SSB}$) |
| DRX cycle<_320ms | Max(200, Ceil(15 × P) × Max(Torx, Tsss)) | Max(100, Ceil(7.5 × P) × Max($T_prx$, TssB)) |
| DRX cycle>320ms | Ceil(10 × P) × $T_{DRX}$ | Ceil(5 × P) × $T_{DRX}$ |
| NOTE: $T_{SSB}$ is the periodicity of the SSB configured for RLM. $T_{DRX}$ is the DRX cycle length. | | |

**Evaluation period $_{reva}i_{na}t_{e\ on,}$ SSB and $T_{evaluate\ in\ SSB}$ for FR2**

Table 1: Requirements for SSB-based RLM for FR1 and FR2

| Configuration | $T_{Evaluate\_out\_SSB}$ (ms) | $T_{Evaluate\_in\_SSB}$ (ms) |
|---|---|---|
| no DRX | Max(200, Ceil(10 × P × N) × $T_{SS}$B) | Max(100, Ceil(5 × P × N) × $T_{SSB}$) |
| DRX cycle<_320ms | Max(200, Ceil(15 × P × N) × Max(T DRX,T SSB)) | Max(100, Ceil(7.5 × P × N) × Max(Torx, Tsss)) |
| DRX cycle>320ms | Ceil(10 × P × N) × $T_{DRX}$ | Ceil(5 × P × N) x $T_{DRX}$ |
| NOTE: $T_{SSB}$ is the periodicity of the SSB configured for RLM. $T_{DRX}$ is the DRX cycle length. | | |

In the tables above, $T_{evaluate\_out}$ is an evaluation period for evaluating out-of-sync (OOS) indications, and $T_{evaluate\_in}$ is an evaluation period for evaluating in-sync (IS) indications. It is noted that N is a scaling factor. It is introduced in FR2 to account for the panel domain, i.e. a UE in FR2 is equipped with multiple panels (MPUE) and may need to do measurements via different panels, for which the specs allow for some freedom / relaxation. P is a sharing/relaxation factor, where P depends on the overlap between the SSBs resources used for RLM and the SSB resources used for RRM (accounting for the measurement gaps, if measurement gaps are configured, or the SSBs indicated e.g. by SSB-ToMeasure or SMTC window duration). In an embodiment, the SSBs used for RRM measurements may be SSBs of neighboring cell/cells (i.e. neighbour cells' RRM measurements) and can comprise all SSBs transmitted by a neighbour cell (e.g. the length of the SMTC window to be applied for RRM measurements of neighbour cells may be such to accommodate all SSBs). However, in some embodiments, the SSBs used for RRM measurements may comprise SSBs transmitted by the current serving cell (i.e. serving cell RRM measurements). In some embodiment, the SSBs to measure may be limited to the set of SSBs indicated in SSB-ToMeasure.

It is noted that a measurement gap is configured to the UE when needed by the UE to make RRM measurements of neighbor cells. Whether a measurement gap is needed or not depends on UE capability, the active bandwidth part (BWP) and current operating frequency of the UE, for example. For example, a UE equipped with two RX chains may be able to do neighbor cell measurements without measurement gaps.

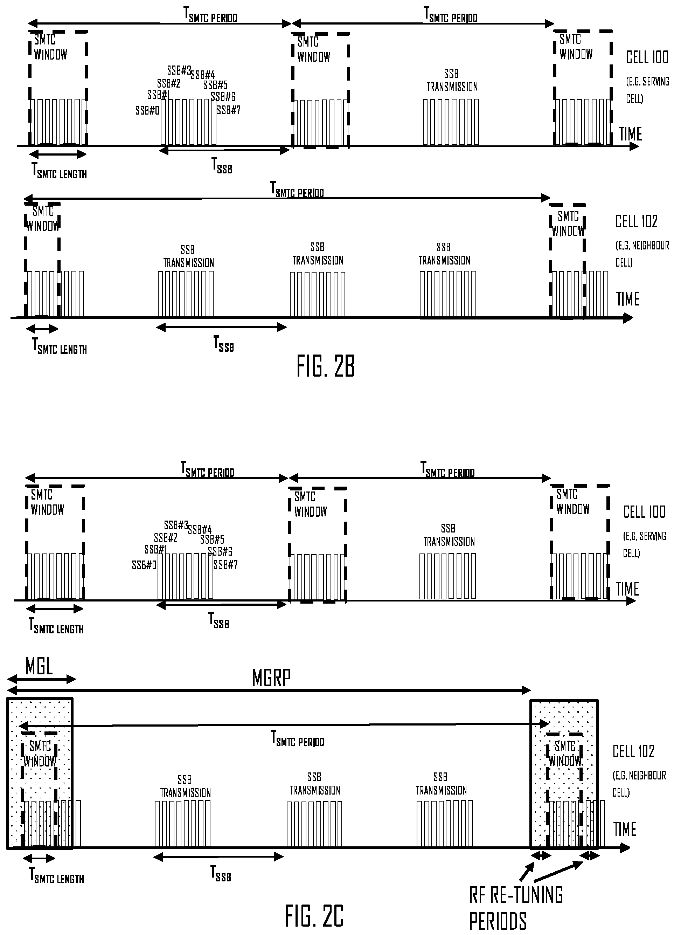

The IE 'ssb-ToMeasure' configures a set of SS blocks to be measured within an SSB measurement timing configuration (SMTC) duration. These SSBs to measure can comprise own cell's SSBs and/or neighbor cell's or cells' SSBs. When the IE is not provided (i.e. the field is absent) the UE measures on all SS-blocks. In 5G NR, the Sync Signal/PBCH block (SSB) burst can comprise multiple SSBs (such as eight in Figures 2A and 2B). These multiple SSBs are associated with the different SSB indexes and with the different downlink transmission beams. 5G NR has introduced SSB based measurement timing configuration, known as SMTC. The SMTC defines a duration/length/window and periodicity that can be used to restrict the UE measurement on the certain resources. Within the SMTC window and on the configured SSBs and/or CSI-RS, UE will conduct e.g. RLM, BFD, and/or RRM measurements. Thus, the IE 'SMTC' may define a measurement timing configuration for measurements, i.e., timing occasions at which the UE measures SSBs.

Figure 2B shows an SMTC configuration example in NR, defining when RRM measurements can be done by UEs that do not need measurements gaps to measure neighbour cells. The parameter $T_{SMTCperiod}$ denoting the SMTC window period, can be set to 5, 10, 20, 40, or 160 ms, for example, and can be different per cell. The parameter $T_{SMTClength}$ is the SMTC window length, which can be set to 1, 2, 3, 4, or 5 ms, for example, and can be different per cell. Typically it is set to a value to allow the UE to measure all transmitted SSBs or all SSBs in SSB-ToMeasure (if configured). The UE may have an SMTC1 for serving cell and an SMTC2 for a neighbor cell. In case of multiple neighbor cells, there may be further SMTSs configured to the UE. The UE may measure all (configured) beams which can be received within the SMTC.

Figure 2C shows an SMTC and measurement gap (MG) configuration example, (where a MG is defining when the RRM measurements of a neighbor cell should be done) for UEs that need MGs for measuring neighbor cell(s). In the Figure, MGL denotes a measurement gap length, which can be set to 1.5, 3, 3.5, 4, 5.5, and 6 ms, for example, to ensure a good match with the SMTC window length to minimize throughput degradation towards serving cell. The parameter MGRP means the measurement gap repetition duration. It is noted that a measurement gap is a period that the UE may use to perform measurements where it is not expected to do any transmission/reception with the serving cell. The measurement gap comprises periods for RF tuning, i.e. where UE can tune its receiver for reception of neighbor cell, for example. These can be 0.5 ms and 0.25 for carrier frequency measurements in FR1 and FR2, respectively, for example.

As an example implementation of Figure 2C, the UE may measure neighboring cell 102 during the measurement gaps and then measure the cell 100 (e.g. RRM measurements) during the second (i.e. middlemost) SMTC window of the upper part of that Figure. RLM/BFD measurement may possibly be done in any of the three SSB transmissions of the own cell that do not overlap with the measurement gap.

The RLM measurements on the serving cell (e.g. from PCell) are done for RLM purposes, while RRM measurements on the serving cell and/or neighbor cells are done for layer 3 (L3) mobility (e.g. for controlling handovers). As a note, there also exists beam failure detection (BFD) measurements for which the embodiments are also applicable. In the tables below, $T_{evaluate\_BFD}$ is an evaluation period for evaluating BFD using SSB-based BFD measurements, in FR1 and FR2, respectively. It is noted that BFD measurements are made also on the serving cell, but only for beam failure detection purposes. More information on RLM, BFD and RRM measurements can be found e.g. from section 9.2. of 3GPP TS 38.300 V16.4.0 (2020-12). All measurement types (RLM, RRM, BFD) can be made based on SSB and/or CSI-RS. The RLM-RS(s) can be configured for RLM purposes, for BFD purposes or for both as per RadioLinkMonitoringConfig.

## Evaluation period $T_{evaluate\ BFD\ SSB}$ for FR1

| Configuration | $T_{Evaluate\ BFD\ SSB}$ (ms) |
|---|---|
| no DRX | $Max(50, Ceil(5 \times P) \times T_{SSB})$ |
| DRX cycle<_320ms | $Max(50, Ceil(7.5 \times P) \times Max(T_{DRX}, T_{SSB}))$ |
| DRX cycle>320ms | $Ceil(5 \times P) \times T_{DRX}$ |
| NOTE: $T_{SSB}$ is the periodicity of the SSB configured for RLM. $T_{DRX}$ is the DRX cycle length | |

## Evaluation period $T_{Evaluate\ BFD\ SSB}$ for FR2

Table 2: Requirements for SSB-based RLM for FR1 and FR2

| Configuration | $T_{Evaluate\ BFD\ SSB}$ (ms) |
|---|---|
| no DRX | $Max(50, Ceil(5 \times P \times N) \times T_{SSB})$ |
| DRX cycle<_320ms | $Max(50, Ceil(7.5 \times P \times N) \times Max(T_{DRX}, T_{SSB}))$ |
| DRX cycle>320ms | $Ceil(5 \times P \times N) \times T_{DRX}$ |
| NOTE: $T_{SSB}$ is the periodicity of the SSB configured for RLM. $T_{DRX}$ is the DRX cycle length | |

As said, the UE may also perform a BFD procedure by performing measurements of RSs configured for BFD purposes (these may be denoted as BFD measurements) and, if needed, it will perform the associated recovery procedure which is used for indicating to the serving gNB of a new SSB or CSI-RS when beam failure is detected on the serving SSB(s)/CSI-RS(s). Beam failure is detected by counting beam failure instance indications from the lower layers to a medium access control (MAC) entity. A radio resource control (RRC) protocol may configure BeamFailureRecoveryConfig and RadioLinkMonitoringConfig for the BFD (and related recovery procedure) and RLM Radio Link Monitoring, respectively.

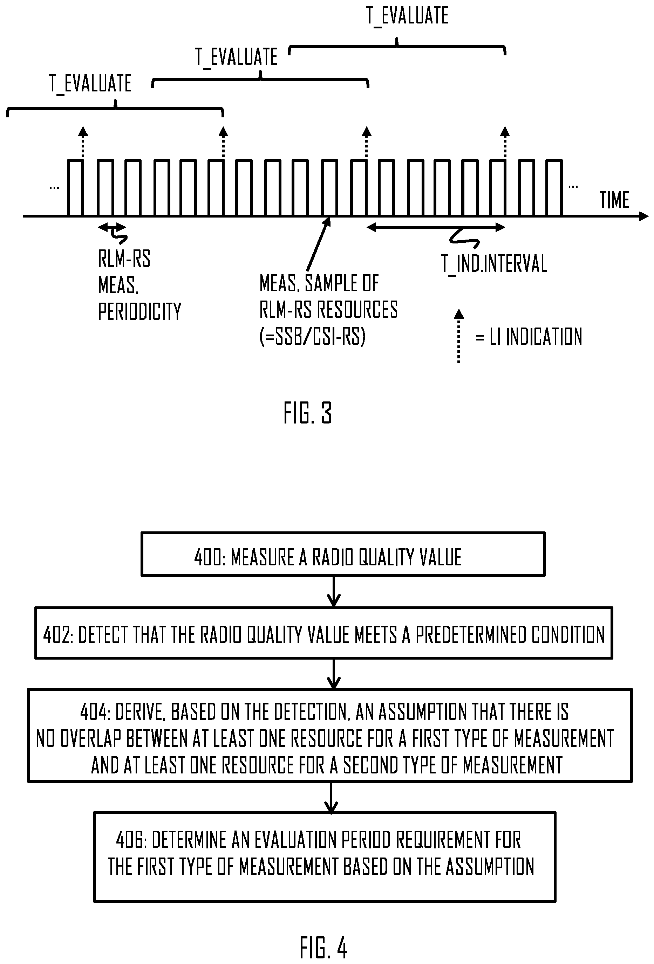

Figure 3 shows a simplified illustration of RLM procedure in NR up to Rel-16. The RLM-RS period might be based on the serving cell's SSB transmission period or a UE-specific parameter (based on CSI-RS resources configured for RLM/BFD). By RLM/BFD it is meant either RLM or BFD or both RLM and BFD. The RLM-RS periodicity may not be expected to be too large in typical scenarios and up to a few tens of ms. $T_{evaluate}$ in Figure 3 can be either of $T_{evaluate\ out}$ or

$T_{evaluate\_in}$ of Table 1 or $T_{evaluate\_BFD}$ of Table 2.

The current requirements for RLM and BFD measurements are defined at least partly based on the DRX cycle of the UE and the RLM-RS periodicity. Note that the layer 1 (L1) indication may be required as often as the RLM-RS period when no DRX if configured. The L1 indication corresponds to the $T_{Indication\_interval}$ in Figure 3 and can be defined as "minimum requirement for L1 indication". I.e. two successive indications from layer 1 shall be separated by at least $T_{Indication\_interval}$ and for a DRX cycle below 320 ms, it may be given by $max(10ms, 1.5 \times DRX_{cycle\_length}, 1.5 \times T_{RLM-RS}, M))$.

When DRX is configured, the RLM-RS measurement requirements may be relaxed according to the DRX cycle. However, it may result in too frequent RLM evaluation (i.e. $T_{evaluate}$) for short DRX cycle, which is unnecessary for low mobility UEs. As noted above, also $T_{indication\_interval}$ is given as a function of the DRX cycle, so the same consideration applies. However, the evaluation implies the need of measuring L1 samples which is more costly than providing the L1 indication to upper layer. The DRX cycle length can be set between 10 ms and 10.24 seconds for UEs in RRC Connected state. Therefore, the RLM and BFD measurements may be relaxed depending on the DRX cycle setting. For example, using the values from Table above, a UE will have an in-sync evaluation period of 800 ms and 3.2 seconds with a DRX cycle length of 160 ms and 640 ms, respectively. These requirements are generic and apply regardless of the UE mobility pattern.

On the contrary, when configuring the DRX cycle length to a shorter value, no or very limited relaxation of RLM and BFD measurements can be achieved. It is noted that the configuration of the DRX cycle may be related to the characteristics of the data traffic/application required by the UE and may particularly reflect the desired trade-off between an acceptable latency what a given UE/application can tolerate and UE power consumption. An additional aspect to account when setting the DRX may be the assumed UE mobility patterns in the cell and potentially the location of the UE in the cell. Hence, whenever the UE is configured with a small value of the DRX cycle (e.g. 10-40 ms), the resulting frequency of UE measurements, including RLM and BFD measurements may be unnecessarily large (e.g. UE is low mobility, but application need short latency and hence short DRX). In such cases the measurement frequency may be unnecessarily large. E.g. in the following cases less measurements could in some situations be sufficient:

- If the UE is in low mobility: since its measurements will likely change very slowly, or
- If the UE is at cell center: since its measurements will reflect a good radio channel
- If the UE is at the cell center and with low mobility: it is expected that the good channel quality will be maintained during a large time period: in this case, the UE will be "constantly" and unnecessarily performing power consuming measurements for BFD / RLM purposes but will still indicate the same indication status (likely 'IS' indication) to higher layers as likely the channel conditions do not change (nor degrade) within the short evaluation periods.

As described above, the relaxation of the RLM / BFD measurements performed by a UE in RRC Connected state is under discussion in Rel-17, in order to obtain UE power saving whenever it is safe from mobility point of view. This means for example UEs at the cell center and/or with low mobility. It is noted that the same considerations apply also to the RRM measurements performed by a UE in RRC Connected state, thus under the same safe conditions it might be safe to relax the RRM measurements as well. From power consumption perspective, it would be most efficient to relax all measurement activities (targeting RLM, BFD, RRM measurements, and even L1-reference signal received power, RSRP, for beam reporting) simultaneously to allow the UE to sleep longer and use the most efficient power state (deep sleep).

Furthermore, even larger power saving can be achieved when the measurement occasions of different measurement types are overlapping in time (e.g. if RLM-RSs overlap in time with the SSBs / SMTC used to perform the RRM measurements). However, it is currently assumed that the UE is not able to reuse an overlapped measurement occasion to perform simultaneously measurements towards the serving cell (e.g. RLM measurements) and neighbour cells (e.g. RRM measurements). This is because the UE is assumed to operate with a first set of spatial Rx settings (e.g. optimized Rx filters controlling the spatial direction of reception) to receive its serving cell and a different second set of spatial Rx settings to receive its neighbour cell(s). In other words, the overlap in time can be exploited only for the serving cell since the Rx parameters used to measure RLM/BFD and RRM towards the serving cell can be the same. In this case, the UE can measure both RLM/BFD and RRM of the own cell simultaneously using the same overlapped measurement occasion, i.e. the same SSB measurement samples are used/shared for both RLM/BFD and RRM measurements. On the contrary, the Rx parameters used to measure RRM measurements towards a neighbor cell will likely be different from the RRM or RLM/BFD of the own cell. I.e. when measuring a neighbor cell, the UE cannot measure the serving cell. That is why some UEs may require configured measurement gaps. In some embodiments, this issue may be specific to frequency range 2 (FR2), and it may not be present in FR1 where the UE may be assumed to use an omnidirectional antenna through which it can measure multiple cells at the same time.

To allow the relaxation of RLM/BFD measurements, the measurement requirements shown in above tables define the parameter P, which is a relaxation factor (also referred to as a Psharing factor) to be applied to the required RLM/BFD measurement/evaluation period depending on the overlapping between the RLM-RS/BFD-RS resources with the SSB symbols indicated by SSB-ToMeasure. In other words, P (if P>1) can be used to extend the RLM evaluation period, which is given as a function of DRX cycle length, SSB period, and P. E.g. the minimum RLM evaluation period is given by 1.5 x P x max (DRX cycle, SSB period) in FR1. It is noted that P can be used in similar manner for BFD measurements. The larger the P value is the more relaxed (longer) is the RLM evaluation period, and in turn the RLM measurement sampling rate can be lower (RLM measurements can be done less often, and thereby it implies a lower UE power consumption).

Because the UE may not be capable of measuring RLM-RS of the serving cell (and/or RRM of the serving cell) simultaneously with RRM-RS of a neighbor cell due to the different Rx settings used for those measurements (especially for FR2), then the UE needs to wake up additionally to measure RLM in SSBs not used for neighbor cell's RRM. To mitigate this, the RLM evaluation has been relaxed by using the P value, such that the UE need not to wake too often. This reduces power consumption of the UE but at the same time affects negatively to the RLM/BFD accuracy because of longer measurement periodicity of RLM/BFD. In other words, for more frequent and up-to-date RLM/BFD measurements, use of P=1 is beneficial in optimizing measurement performance of the UE.

While other values for P are allowed, for a case where no measurement gaps are assumed, P can take values of:

- P = 1, if no overlap (as indicated earlier, an overlap can be defined as an overlap between SSBs resources used for RLM/BFD (for SSB based RLM/BFD) and SSB resources used for RRM (e.g. of neighboring cell/cells), or an overlap between CSI-RS resources used for RLM/BFD (for CSI-RS based RLM/BFD) and SSB resources used for RRM (e.g. of neighboring cell/cells)- for the latter the overlap between CSI-RS for RLM/BFD and SMTC means that CSI-RS based RLM/BFD is within the SMTC window duration),
- P = 3, if overlap.

For a case with measurement gaps configured:

- P = 1, if the RLM-RS resource outside measurement gap is

  ○ not overlapped with the SSB symbols indicated by SSB-ToMeasure and 1 data symbol before each consecutive SSB symbols indicated by SSB-ToMeasure and 1 data symbol after each consecutive SSB symbols indicated by SSB-ToMeasure, given that SSB-ToMeasure is configured, and,
  ○ not overlapped by the received signal strength indicator (RSSI) symbols indicated by IE ss-RSSI-Measurement (which is used to configure RSSI measurements based on synchronization reference signals) and 1 data symbol before each RSSI symbol indicated by ss-RSSI-Measurement and 1 data symbol after each RSSI symbol indicated by ss-RSSIMeasurement, given that ss-RSSI-Measurement is configured.
  ○ i.e. if a measurement gap is configured, then the RRM measurements of neighbor cells are done during the measurement gap. If the measurement gap does not overlap with SSBs used for RLM, no extra waking up is required by the UE for RLM purposes (i.e. the UE can use all the SSBs transmitted by the serving cell for RLM measurements) and thus no relaxation is needed (P = 1).

- P = 3, otherwise.

  ○ where, if the high layer signaling of smtc2 is present, $T_{SMTCperiod}$ follows smtc2; Otherwise $T_{SMTCperiod}$ follows smtc1. $T_{SMTCperiod}$ is the shortest SMTC period among all component carriers (CCs) in the same FR2 band, provided the SMTC offset of all CCs in FR2 have the same offset.

In some situations, the UE may omit neighbour cells measurements according to the network-defined parameter, s-MeasureConfig. That is, assuming a UE that meets the following condition: Serving Cell RSRP > s-MeasureConfig (thus the UE is not required to measure neighbour cells), in such case the UE can use the same first set of spatial Rx settings for all measurements type towards the serving cell (RLM, RRM, etc). Thus, the reuse of measurement occasions could be in principle possible whenever neighbour cells measurements can be omitted. Reusing or sharing a measurement sample for different measurement types (RLM/BFD/RRM measurements) means that the UE can do reception of the (e.g.) SSB transmitted by the network at a given measurement occasion to derive both an RLM measurement sample and serving cell RRM measurement sample.

As explained above, using P = 1 instead of e.g. P = 3 means a e.g. a shortened RLM evaluation period. This may decrease the amount of RLM issues (e.g. reduced radio link failure, RLF). Thus, whenever there is no need for the relaxation based on P, from a network perspective, it may be beneficial for the UE to have tighter requirements (i.e. P=1, or in general lower value than a predetermined upper limit, e.g. P<3). Although described in connection of RLM, it needs to be noted that P value may be taken into use for BFD evaluation period, whereas it may not affect RRM measurement period requirements (i.e. P factor is not present in the RRM measuring requirements).

To at least partially tackle the problem of optimizing measurement performance of the UE, there is proposed a solution depicted in Figure 4. The method may be performed by a user equipment, such as the UE 120 of Figure 1.

Accordingly, as shown in Figure 4, the UE 120 in step 400 measures a radio quality value. In an embodiment, the radio quality value is of a current serving cell. In another embodiment, the radio quality value is of a cell neighboring the current serving cell. In an embodiment, the radio quality value is a measured RSRP of the cell. Although RSRP is used as an example, any other quality value indicating the radio quality of the cell is applicable, such as RSRQ, RSSI, or SINR, for example.

In step 402, the UE 120 detects that the radio quality value meets a predetermined condition. In an embodiment, the UE 120 acquires the predetermined condition from a network, e.g. from the gNB 110 via broadcast or dedicated signaling. In another embodiment, the predetermined condition is preconfigured (hardcoded) to the UE 120, e.g. stored in the memory of the UE 120.

In an embodiment, the predetermined condition requires that the measured radio quality value is above a predetermined quality threshold. In such case, the UE 120 may receive from the network the quality threshold, or the quality threshold may be preconfigured to the UE. In an embodiment, the predetermined quality threshold comprises a parameter from s-MeasureConfig, and the radio quality value comprises the RSRP. The predetermined condition may thus be that RSRP of the current serving cell is larger than s-measure value, i.e. Serving Cell RSRP > s-MeasureConfig.

In another embodiment, the radio quality value is of the neighboring cell and when that drops below a certain threshold, the predetermined condition is met. In another embodiment, the radio quality value relates to the speed of the UE 120, and when the speed meets a predetermined threshold, the condition is met. For example, when the speed is low enough (implying that the radio quality stays stable), the condition is met.

The predetermined condition defines whether or not the apparatus needs to measure at least one cell neighboring the current serving cell. For example, when the predetermined condition is met, the UE 120 may decide that it need not measure neighboring cells, i.e. the UE 120 is not required to measure non-serving cells. As an example related to Figure 1, the UE 120 connected to cell 100 may measure RSRP of cell 100 that is above the s-MeasureConfig threshold, and consequently decide that the UE 120 need not measure the non-serving cell 102.

In step 404, the UE 120 then derives, based on the detection of step 402, an assumption that there is no overlap between at least one resource for a first type of measurement and at least one resource for a second type of measurement, and in step 406 determines an evaluation period requirement for the first type of measurements based on the derived assumption. In addition, the UE 120 may also derive evaluation period for the second type of measurements as well or instead.

In an embodiment, the term "evaluation period" here refers to $T_{evaluate}$ of Fig-ure 3, such as to $T_{evaluate\_in}$ or $T_{evaluate\_out}$ of Table 1 above or to $T_{evaluate\_BDF}$ of Table 2. In an embodiment, evaluation period comprises a measurement period, i.e. evaluation comprises measuring and evaluation period relates to or implies a measurement period. In other words, in an embodiment, the UE 120 in step 406 determines the evaluation period and/or a measurement period requirement. The measurement period may refer to a period during which the UE's layer one (layer 1) needs to evaluate IS/OOS conditions and/or provide IS/OOS indications to higher layers. The requirements of the evaluation period may refer to the length of the evaluation period and/or measurement period (e.g. sampling rate) for the first type of measurements, for example.

In an embodiment, the first type of measurement comprises measurements for radio link monitoring (RLM). In an embodiment, the first type of measurement comprises measurements for beam failure detection (BFD). In an embodiment, the first type of measurements comprises measurements for both RLM and BFD. These may generally relate to serving cell measurements. It may be noted that RLM is a radio link level procedure whereas BFD is a beam level procedure. In an embodiment, the second type of measurement comprises measurements for radio resource management (RRM). These may relate to non-serving cell measurements and/or serving cell measurements. These measurements of the second type may relate to mobility measurements, for example. Let us in the description, for simplicity, refer to RLM/BFD and RRM measurements as the measurements of the first type and second type, respectively.

In an embodiment, the deriving of step 404 takes place irrespective of whether there is actual overlap or not between the resources. I.e. the UE 120 need not consider do the resources for the RLM/BDF measurements and for the RRM measurements overlap. Even if there is an actual overlap, the UE 120 may apply the assumption that there is no overlap. For example, the UE applies the sharing factor P associated to no overlap (P = 1), if its serving cell RSRP is larger than s-MeasureConfig, even if there is an actual overlap.

The assumption that there is no overlap between the resources may be beneficial to take into use as this may cause setting the sharing/relaxation factor P to 1 (or to a small value, e.g. less than 3). It needs to be noted, as explained above, factor P is applied in determining the evaluation period requirements. Use of P=1 (or small P value in general) may provide more up-to-date measurements of the current serving cell than use of P>1 (or use of a large P value such as 3 or larger). Thus, whenever it is possible, it may be beneficial to use small P value (such P=1), and consequently relax or avoid the neighbor cell measurements.

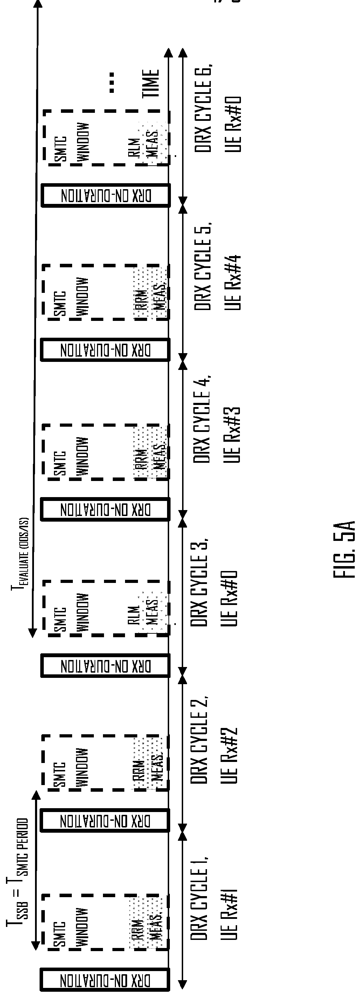

For illustration purposes Figure 5A depicts a case where resources actually overlap. In the Figure, $T_{SSB} =$

$T_{SMTCperiod}$. TSSB is the periodicity of the SSB configured for RLM, while $T_{SMTCperiod}$ is the periodicity of SMTC windows. The parameter $T_{evaluate}$ may be taken from Table 1 above, for example. It is noted that P=1 when the RLM-RS resource is not overlapped with measurement gap (in this example no measurement gaps are needed) and RLM-RS resource is not overlapped with SMTC period. Otherwise, P=3, i.e. when RLM-RS resources are overlapped with the SSB symbols indicated by SSB-ToMeasure. This P=3 is the case in this Figure. It can be seen that the RLM measurements are done less frequently than RRM measurements of neighbor cell (or own cell), i.e. UE makes one RLM measurement over three measurements and two RRM measurements over the three measurements.

The label UE Rx#x denotes UE's spatial receiver settings. For illustration purposes UE Rx#0 denotes that the UE is to measure the serving cell (e.g. RRM and RLM of the serving cell), while e.g. UE Rx#1 means the UE applies spatial receiver setting #1 to measure e.g. the neighboring cell or own cell in different direction. In an embodiment, there are up to 24 different Rx settings swept for example, although only a few are shown in the Figure.

In this example of Figure 5A, the measurements are outside the DRX On-Duration but it could be done inside the On-Duration as well, if the NW configures the ON-Duration to align with the SSB transmission. In such case, the SMTC window can be located inside the ON-Duration.

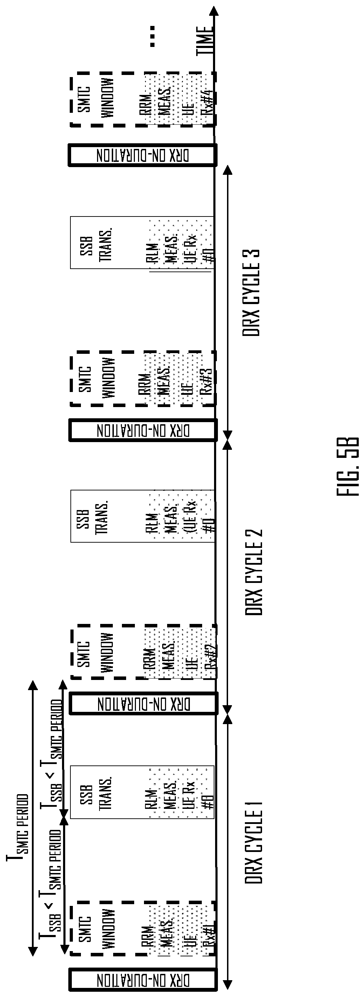

Figure 5B shows a case where the resources do not overlap, at least not fully. In this case the RLM measurements can be done more frequently than in Figure 5A. It is noted that $T_{SSB} < T_{SMTCperiod}$, which means that there is no or partial overlap and, thus, P may be set to a smaller value, e.g. P = 1 or 2.

In an embodiment, determining the assumption that there is no overlap between the resources is further dependent on a detection that there are no measurement gaps configured which are overlapping with the resources for measurements. In one example, the UE applies the value of the sharing factor P associated to no overlap (i.e. P=1) whenever the UE is allowed to omit its neighbour cells measurements only if no measurement gaps are configured to the UE. As explained earlier, measurement gaps, if needed, are used by the UE to measure neighboring cells. If the RLM/BFD measurement resource or resources overlap with the measurement gaps, then a sharing factor P>1 may be taken into use so that the UE need not wake up additionally to measure RLM/BFD frequently, and consequently the requirements for the evaluation period may be relaxed for the RLM/BFD. Although Figures 5A-5C refer to RLM monitoring occasions, the same may be used for BFD, instead or in addition to the RLM measurements.

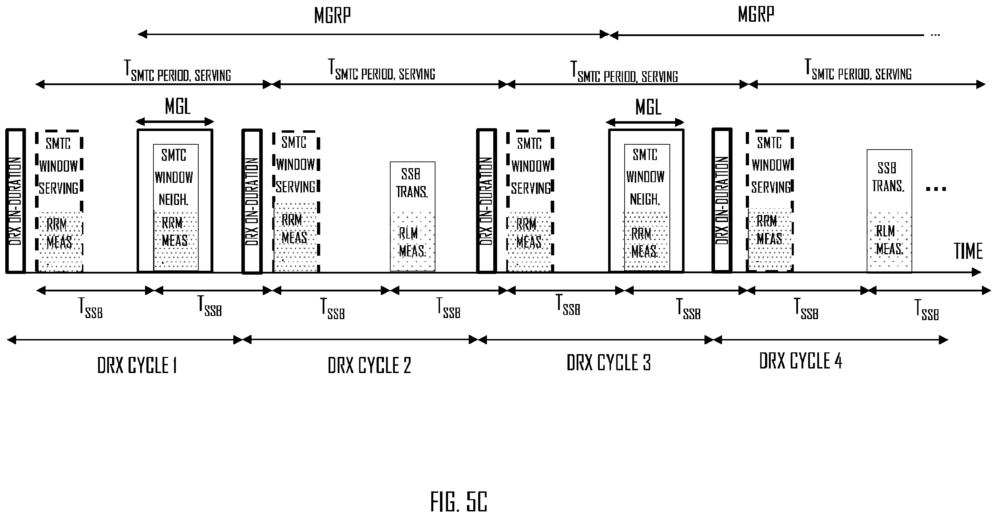

Figure 5C shows an example where P = 4 (i.e. there is one RLM measurement over four measurement occasions, and three RRM measurements over the four measurement occasions). In this example, $T_{SSB}$ (e.g. 20ms) < $T_{SMTCperiod}$ (e.g. 40 ms), i.e. $T_{SSB}$ = 0.5 x $T_{SMTCperiod}$. Further, $T_{SMTCperiod}$ # MGRP (e.g. MGRP = 80ms), and $T_{DRX}$ = 40 ms, for example. It can be seen that the RLM-RS resource is partially overlapped with a measurement gap, and the RLM-RS is partially overlapped with SMTC occasion ($T_{SSB} < T_{SMTCperiod}$), while SMTC occasion is not overlapped with the measurement gap. Thus, because there is an overlap, the UE may set P>1 (e.g. P=4). However, if the RSRP of the serving cell is above s-Measure, then the UE may set P=1 as other cells need not be measured.

In an embodiment, in response to detecting that the radio quality value changes such that the predetermined condition is no longer met, the UE 120 may determine the evaluation period requirement based on whether there is an actual overlap or not. I.e. when the radio quality value meets the predetermined condition, the UE can, irrespectively of whether there is an actual overlap, use P=1. But when the radio quality value no longer meets the predetermined condition, the UE 120 may need to determine whether or not there is an actual overlap between the resources and set value for P based on that determination. For example, when there is an overlap between the resources and the predetermined condition no longer holds, the UE may set the relaxation factor P to larger than 1 (e.g. P=3 or some other predefined value indicating the relaxation of RLM measurements, wherein P is applied in determining the evaluation period requirements.

In an embodiment, the UE 120 determines which sharing factor P to apply based on its Rx settings. For example, the number of RX chains the UE has may affect the setting of value P. In one embodiment, a UE equipped with two RX chains may be able to do neighbor cell measurements without measurement gaps. Such UEs which are able to measure from multiple frequency bands and/or multiple spatial directions (i.e. panels) simultaneously may assume lower P value as there is no need to share the measurement occasion at all/less frequently.

In an embodiment, the derivation of the assumption that there is no overlap (in step 404) is done only when the first type of measurements are allowed to be relaxed. Consequently, the determination of the evaluation period requirement for the first type of measurements based on the assumption in step 406 is done only when the first type of measurements are allowed to be relaxed. This may be based on an indication from a net-work, for example. That is, the network (e.g. the gNB 110) may have sent to the UE 120 an indication that the first type of measurements can be relaxed. This relaxation may relate to another relaxation factor, such as to relaxation factor K of Rel-17. For example, the UE may set the Rel-17 relaxation K to a value larger than 1 (e.g. K=4) and the P factor to 1 (instead of e.g. P=2). The indication from the network may comprise the network sending to the UE an explicit flag indicating that relaxation is allowed. In another embodiment, the network may send to the UE one or more thresholds so that the UE may then determine whether the relaxation can be done based on predefined relaxation conditions and the received one or more thresholds.

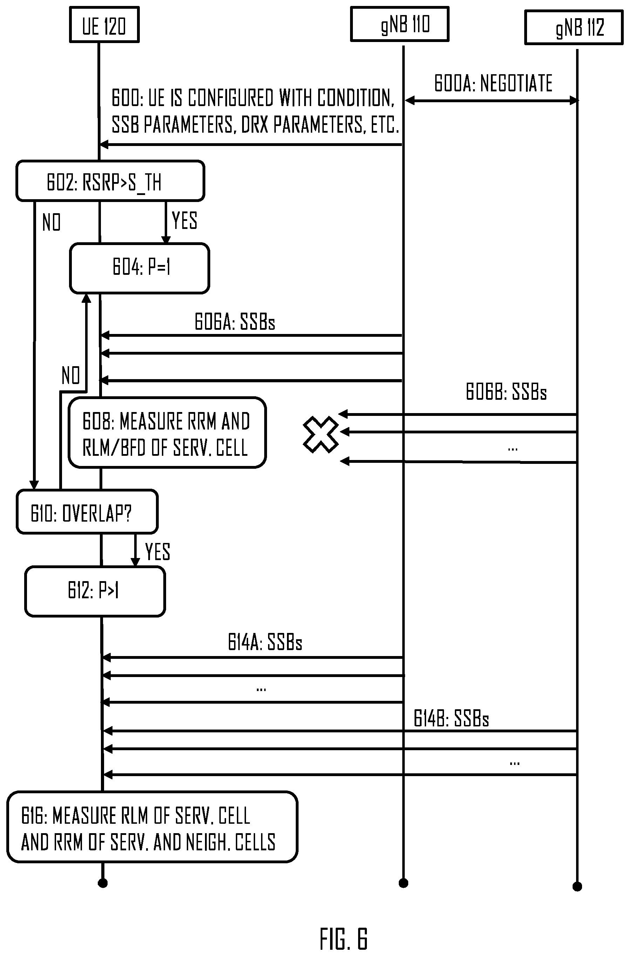

Figure 6 depicts a signaling flow diagram taking place between a node of a serving cell (e.g. gNB 110), a node of a neighboring cell (e.g. gNB 112) and the UE 120. In step 600 the UE 120 is configured by the gNB 110 with parameters needed for performing the above-discussed measurements. These parameters may include e.g. the predetermined condition (e.g. the s-MeasureConfig), SSB related parameters (e.g. $T_{SSB}$), SMTC related parameters (e.g. window length and $T_{SMTCperiod}$), parameters related to measurement gaps (e.g. MGRP, MGL), DRX related parameters (e.g. DRX cycle duration), evaluation periods, indication intervals, etc. The gNB 110 may also provide an indication to the UE which allows the UE to relax the 1st and/or 2nd type of measurements. This may be e.g. a bit indicator sent to the UE in system information.

In order for the gNB 110 t0 be able to provide all the information, the gNB 110 and the gNB 112 may negotiate in step 600A regarding the parameters, e.g. regarding when the neighboring cell sends SSBs which the UE can measure during RRM measurements.

In step 602, the UE 120 determines if the radio quality value (e.g. RSRP of serving cell) is above a given threshold (such as s-Measure). If this is the case and consequently the UE is not required to measure neighboring cell 102 provided by the gNB 112, the flow proceeds to step 604 where P is set to 1 with an assumption that there is no overlap between the resources for 1st and 2nd type of measurements. Thereafter, UE 120 may monitor SSBs 606A from the serving cell based on the parameters obtained in step 600 and perform RRM and RLM/BFD measurements in step 608. Although the neighboring cell 112 may transmit its SSBs 606B, the UE 120 may ignore those.

However, in case the RSRP is not higher than the threshold in step 602, the flow may proceed to step 610 where it is determined whether or not the resources for 1st and 2nd type of measurements overlap. This can be determined based on the information of step 600. In case the resources do not overlap, the process may go to step 604 where P is set to 1. However, if the resources do overlap, then it may be decided that 1st type of measurements are relaxed, by setting P>1 in step 612. Consequently, the UE then monitors also neighbour cell's SSBs 614B for RRM purposes, in addition to serving cell's SSBs 614A for RRM and RLM/BFD purposes and make the measurements in step 616.

Although not shown in the Figure, the UE 120 may report the measurement results to the gNB 110.

The proposed embodiments may allow the UE to obtain power saving by reusing the measurement occasions when it can relax neighbour cells measurements rather than waking up at e.g. multiple SMTC windows to perform the various types of measurements in sequence, and may allow to do so in a compliant manner with the defined requirements.

Although described in Figures in connection of RLM, the embodiments are similarly applicable to BFD measurements in addition or instead of RLM measurements. Further, in some embodiments the first type of measurements may be RRM measurements and the second type of measurements may be RLM and/or BFD measurements. I.e. the relaxation may be applied to RRM instead. E.g. RedCap devices with reduced capabilities for cost reduction comprise wearables (e.g. smart watches, wearable medical devices, AR/VR goggles, etc.), industrial wireless sen-sors, and video surveillance. RedCap devices are considered beneficial to support use cases with less stringent data rate and latency requirements than eMBB but tighter than eMTC. The user equipment 120 may be e.g. a RedCap device.

A possible implementation of the proposed embodiments into standard specifications (under section 8.1.2.2. *Minimum requirement* of TS 38.133) may be as follows (underlined showing additions with respect to TS 38.133 V17.0.0 (2020-12):

*UE shall be able to evaluate whether the downlink radio link quality on the configured RLM-RS resource estimated over the last $T_{Evaluate\_out\_SSB}$ [ms] period becomes worse than the threshold $Q_{out\_SSB}$ within $T_{Evaluate\_out\_SSB}$ [ms] evaluation period.*

*UE shall be able to evaluate whether the downlink radio link quality on the configured RLM-RS resource estimated over the last $T_{Evaluate\_in\_SSB}$ [ms] period becomes better than the threshold $Q_{in\_SSB}$ within $T_{Evaluate\_in\_SSB}$ [ms] evaluation period.*

*$T_{Evaluate\ out\ SSB}$ and $T_{Evaluate\_in\_SSB}$ are defined in Table 8.1.2.2-1 for FR1.*

*$T_{Evaluate\ out\ SSB}$ and $T_{Evaluate\_in\_SSB}$ are defined in Table 8.1.2.2-2for FR2 with N=8.*

*For FR1,*

- *$P=1/(1 - T_{SSB}/MGRP)$, when in the monitored cell there are measurement gaps configuredfor intra-frequency, inter-frequency or inter-RAT measurements, which are overlapping with some but not all occasions of the SSB; and*

- *P=1 when in the monitored cell there are no measurement gaps overlapping with any occasion of the SSB,*

- *P=1 when UE is configured with s-MeasureConfig and Serving Cell RSRP > s-MeasureConfig and when in the monitored cell there are measurement gaps configured for intra-frequency, inter-frequency or inter-RAT measurements, which are overlapping with occasions of the SSB.*

*For FR2,*

- $P=1/(1 - T_{SSB}/_{SMTCperiod})$, *when RLM-RS is not overlapped with measurement gap and RLM-RS is partially overlapped with SMTC occasion* ($T_{SSB} < T_{SMTCperiod}$).

- $\underline{P=1/(1 - T_{SSB}/T_{SMTperiod})}$. *when RLM-RS is when RLM-RS is partially overlapped orully overlapped with measurement gap and RLM-RS is partially overlapped with SMTC occasion* ($T_{SSB} \leq T_{SMTCperiod}$) *and when UE is configured with s-MeasureConfig and Serving Cell RSRP > s-MeasureConfig,*

- *P is Psharing factor, when the RLM-RS resource is not overlapped with measurement gap and RLM-RS resource is fully overlapped with SMTC period* (TSSB = TSMTCperiod).

- *P is* $1/(1 - T_{SSB}/MGRP - T_{SSB}/T_{SMTCperiod})$, *when RLM-RS is partially overlapped with measurement gap and RLM-RS is partially overlapped with SMTC occasion* ($T_{SSB} < T_{SMTCperiod}$) *and SMTC occasion is not overlapped with measurement gap and*

- 

$$T_{SMTCperiod} \neq MGRP$$

*or*

$$T_{SMTCperiod} = MGRP \text{ and } T_{SSB} < 0.5*T_{SMTCperiod}$$

- 

$$P = \frac{P_{sharing\ factor}}{1 - \frac{T_{SSB}}{MGRP}},$$

*when the RLM-RS is partially overlapped with measurement gap and the RLM-RS is partially overlapped with SMTC occasion* ($T_{SSB} < T_{SMTCperiod}$) *and SMTC occasion is not overlapped with measurement gap and* $T_{SMTCperiod} = MGRP$ *and* $T_{SSB} = 0.5 \times T_{SMTCperiod}$

- 

$$P = \frac{P_{sharing\ factor}}{1 - \frac{T_{SSB}}{MGRP}},$$

*when the RLM-RS resource is partially overlapped with measurement gap and the RLM-RS resource is partially overlapped with SMTC occasion* ($T_{SSB} < T_{SMTCperiod}$) *and SMTC occasion is partially or fully overlapped with measurement gap*

- 

$$P = \frac{P_{sharing\ factor}}{1 - \frac{T_{SSB}}{MRGP}},$$

*when the RLM-RS resource is partially overlapped with measurement gap and the RLM-RS resource is fully overlapped with SMTC occasion* ($T_{SSB} = T_{SMTCper_iod}$) *and SMTC occasion is partially overlapped with measurement gap* ($T_{SMTCperiod} < MGRP$)
- *Psharing $_{factor}$ = 1, if the RLM-RS resource outside measurement gap is*

- *not overlapped with the SSB symbols indicated by SSB-ToMeasure and 1 data symbol before each consecutive SSB symbols indicated by SSB-ToMeasure and 1 data symbol after each consecutive SSB symbols indicated by SSB-ToMeasure, given that SSB-ToMeasure is configured, and,*
- *not overlapped by the RSSI symbols indicated by ss-RSSI-Measurement and 1 data symbol before each RSSI symbol indicated by ss-RSSI-Measurement and 1 data symbol after each RSSI symbol indicated by ss-RSSI-*

*Measurement, given that ss-RSSI-Measurement is configured.*

- *Psharing $_{factor}$ = 3, otherwise.*

*where,*
*If the high layer in TS 38.331 [2] signaling of smtc2 is present, $T_{SMTCperiod}$ follows smtc2; Otherwise $T_{SMTCperiod}$ follows smtc1. $T_{SMTCperiod}$ is the shortest SMTC period among all CCs in the same FR2 band, provided the SMTC offset of all CCs in FR2 have the same offset.*

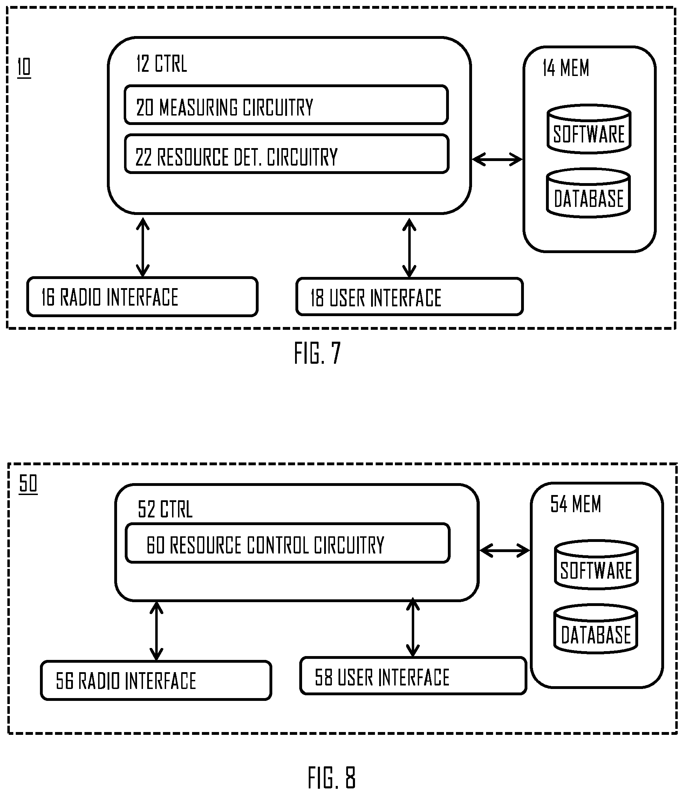

An embodiment, as shown in Figure 7, provides an apparatus 10 comprising a control circuitry (CTRL) 12, such as at least one processor, and at least one memory 14 including a computer program code (software), wherein the at least one memory and the computer program code (software), are configured, with the at least one processor, to cause the apparatus to carry out any one of the above-described processes. The memory may be implemented using any suitable data storage technology, such as semiconductor-based memory devices, flash memory, magnetic memory devices and systems, optical memory devices and systems, fixed memory and removable memory. The memory may comprise a database for storing data.

In an embodiment, the apparatus 10 may comprise the terminal device of a communication system, e.g. a user terminal (UT), a computer (PC), a laptop, a tabloid computer, a cellular phone, a mobile phone, a communicator, a smart phone, a palm computer, a mobile transportation apparatus (such as a car), a household appliance, or any other communication apparatus, commonly called as UE in the description. Alternatively, the apparatus is comprised in such a terminal device. Further, the apparatus may be or comprise a module (to be attached to the UE) providing connectivity, such as a plug-in unit, an "USB dongle", or any other kind of unit. The unit may be installed either inside the UE or attached to the UE with a connector or even wirelessly.

In an embodiment, the apparatus 10 is or is comprised in the UE 120. The apparatus may be caused to execute some of the functionalities of the above described processes, such as the steps of Figure 4.

The apparatus may further comprise a radio interface (TRX) 16 comprising hardware and/or software for realizing communication connectivity according to one or more communication protocols. The TRX may provide the apparatus with communication capabilities to access the radio access network, for example.

The apparatus may also comprise a user interface 18 comprising, for example, at least one keypad, a microphone, a touch display, a display, a speaker, etc. The user interface may be used to control the apparatus by the user.

The control circuitry 12 may comprise a measuring circuitry 20 for performing radio quality value measurements, RLM/BFD measurements, RRM measurements, according to any of the embodiments. The control circuitry 12 may further comprise a resource determination circuitry 22 for determining whether e.g. the resources for $1^{st}$ and $2^{nd}$ type of measurements are overlapping, for setting an appropriate P value for the measurements, for determining the evaluation period requirements, according to any of the embodiments.

An embodiment, as shown in Figure 8, provides an apparatus 50 comprising a control circuitry (CTRL) 52, such as at least one processor, and at least one memory 54 including a computer program code (software), wherein the at least one memory and the computer program code (software), are configured, with the at least one processor, to cause the apparatus to carry out any one of the above-described processes. The memory may be implemented using any suitable data storage technology, such as semiconductor-based memory devices, flash memory, magnetic memory devices and systems, optical memory devices and systems, fixed memory and removable memory. The memory may comprise a database for storing data.

In an embodiment, the apparatus 50 may be or be comprised in a network node, such as in gNB/gNB-CU/gNB-DU of 5G. In an embodiment, the apparatus is or is comprised in the network node 110. The apparatus may be caused to execute some of the functionalities of the above described processes.

In an embodiment, a CU-DU (central unit - distributed unit) architecture is implemented. In such case the apparatus 50 may be comprised in a central unit (e.g. a control unit, an edge cloud server, a server) operatively coupled (e.g. via a wireless or wired network) to a distributed unit (e.g. a remote radio head/node). That is, the central unit (e.g. an edge cloud server) and the radio node may be stand-alone apparatuses communicating with each other via a radio path or via a wired connection. Alternatively, they may be in a same entity communicating via a wired connection, etc. The edge cloud or edge cloud server may serve a plurality of radio nodes or a radio access networks. In an embodiment, at least some of the described processes may be performed by the central unit. In another embodiment, the apparatus may be instead comprised in the distributed unit, and at least some of the described processes may be performed by the distributed unit. In an embodiment, the execution of at least some of the functionalities of the apparatus 50 may be shared between two physically separate devices (DU and CU) forming one operational entity. Therefore, the apparatus may be seen to depict the operational entity comprising one or more physically separate devices for executing at least some of the described processes. In an embodiment, the apparatus controls the execution of the processes, regardless of the location of the apparatus and regardless of where the processes/functions are carried out.

The apparatus may further comprise communication interface (TRX) 56 comprising hardware and/or software for realizing communication connectivity according to one or more communication protocols. The TRX may provide the apparatus with communication capabilities to access the radio access net-work, for example. The apparatus may also comprise a user interface 58 comprising, for example, at least one keypad, a microphone, a touch display, a display, a speaker, etc. The user interface may be used to control the apparatus by the user.

The control circuitry 52 may comprise a resource control circuitry 60 for controlling which resources are to be used for enabling different type of measurements to be performed by the UE 120, and for configuring the UE with different parameters required for performing the different kinds of measurements, according to any of the embodiments.

In an embodiment, an apparatus carrying out at least some of the embodiments described comprises at least one processor and at least one memory including a computer program code, wherein the at least one memory and the computer program code are configured, with the at least one processor, to cause the apparatus to carry out the functionalities according to any one of the embodiments described. According to an aspect, when the at least one processor executes the computer program code, the computer program code causes the apparatus to carry out the functionalities according to any one of the embodiments described. According to another embodiment, the apparatus carrying out at least some of the embodiments comprises the at least one processor and at least one memory including a computer program code, wherein the at least one processor and the computer program code perform at least some of the functionalities according to any one of the embodiments described. Accordingly, the at least one processor, the memory, and the computer program code form processing means for carrying out at least some of the embodiments described. According to yet another embodiment, the apparatus carrying out at least some of the embodiments comprises a circuitry including at least one processor and at least one memory including computer program code. When activated, the circuitry causes the apparatus to perform the at least some of the functionalities according to any one of the embodiments described.

As used in this application, the term 'circuitry' refers to all of the following: (a) hardware-only circuit implementations, such as implementations in only analog and/or digital circuitry, and (b) combinations of circuits and soft-ware (and/or firmware), such as (as applicable): (i) a combination of processor(s) or (ii) portions of processor(s)/software including digital signal processor(s), software, and memory(ies) that work together to cause an apparatus to perform various functions, and (c) circuits, such as a microprocessor(s) or a portion of a microprocessor(s), that require software or firmware for operation, even if the software or firmware is not physically present. This definition of 'circuitry' applies to all uses of this term in this application. As a further example, as used in this application, the term 'circuitry' would also cover an implementation of merely a processor (or multiple processors) or a portion of a processor and its (or their) accompanying software and/or firmware. The term 'circuitry' would also cover, for example and if applicable to the particular element, a baseband integrated circuit or applications processor integrated circuit for a mobile phone or a similar integrated circuit in a server, a cellular network device, or another network device.

In an embodiment, at least some of the processes described may be carried out by an apparatus comprising corresponding means for carrying out at least some of the described processes. Some example means for carrying out the processes may include at least one of the following: detector, processor (including dual-core and multiple-core processors), digital signal processor, controller, receiver, transmitter, encoder, decoder, memory, RAM, ROM, software, firmware, display, user interface, display circuitry, user interface circuitry, user interface software, display software, circuit, antenna, antenna circuitry, and circuitry.

The techniques and methods described herein may be implemented by various means. For example, these techniques may be implemented in hardware (one or more devices), firmware (one or more devices), software (one or more modules), or combinations thereof. For a hardware implementation, the apparatus(es) of embodiments may be implemented within one or more application-specific integrated circuits (ASICs), digital signal processors (DSPs), digital signal processing devices (DSPDs), programmable logic devices (PLDs), field programmable gate arrays (FPGAs), processors, controllers, micro-controllers, microprocessors, other electronic units designed to perform the functions described herein, or a combination thereof. For firmware or software, the implementation can be carried out through modules of at least one chip set (e.g. procedures, functions, and so on) that perform the functions described herein. The software codes may be stored in a memory unit and executed by processors. The memory unit may be implemented within the processor or externally to the processor. In the latter case, it can be communicatively coupled to the processor via various means, as is known in the art. Additionally, the components of the systems described herein may be rearranged and/or complemented by additional components in order to facilitate the achievements of the various aspects, etc., described with regard thereto, and they are not limited to the precise configurations set forth in the given figures, as will be appreciated by one skilled in the art.

Embodiments as described may also be carried out in the form of a computer process defined by a computer program or portions thereof. Embodiments of the methods described may be carried out by executing at least one portion of a computer program comprising corresponding instructions. The computer program may be in source code form, object code form, or in some intermediate form, and it may be stored in some sort of carrier, which may be any entity or device capable of carrying the program. For example, the computer program may be stored on a computer program distribution medium readable by a computer or a processor. The computer program medium may be, for example but not limited to, a record medium, computer memory, read-only memory, electrical carrier signal, telecommunications signal, and software distribution package, for example. The computer program medium may be a non-transitory medium. Coding of software for carrying out the embodiments as shown and described is well within the scope of a person of ordinary skill in the art.

**Claims**

1. A user equipment (120), comprising means for performing:

    measuring (400) a radio quality value;
    detecting (402) that the radio quality value meets a predetermined condition;
    deriving (404), based on the detection, an assumption that there is no overlap between at least one resource for a first type of measurement and at least one resource for a second type of measurement; and
    determining (406), based on the assumption, an evaluation period requirement for the first type of measurement.

2. The user equipment (120) of claim 1, wherein the means are further configured to acquire the predetermined condition from a network.

3. The user equipment (120) of any of claims 1 to 2, wherein the predetermined condition requires that the radio quality value is above a predetermined quality threshold.

4. The user equipment (120) of claim 3, wherein the predetermined quality threshold comprises a parameter from s-MeasureConfig, and the radio quality value comprises a reference signal received power.

5. The user equipment (120) of any of claims 1 to 4, wherein the predetermined condition defines whether or not the user equipment (120) needs to measure at least one cell (102) neighboring a current serving cell (100).

6. The user equipment (120) of any of claims 1 to 5, wherein the first type of measurement comprises at least one of: measurements for radio link monitoring, or measurements for beam failure detection.

7. The user equipment (120) of any of claims 1 to 6, wherein the second type of measurement comprises measurements for radio resource management.

8. The user equipment (120) of any of claims 1 to 7, wherein the assumption that there is no overlap between the resources causes setting a relaxation factor P to 1, wherein P is applied in determining the evaluation period requirement.

9. The user equipment (120) of any of claims 1 to 8, wherein the assumption that there is no overlap between the resources is further dependent on a detection that there are no measurement gaps configured which are overlapping with the resources.

10. The user equipment (120) of any of claims 1 to 9, wherein:

    there is no actual overlap between the resources if the at least one resource for the first type of measurement is outside a measurement gap and:

        • not overlapped with synchronization signal block, SSB, symbols indicated by an SSB-ToMeasure and 1 data symbol before each consecutive SSB symbols indicated by the SSB-ToMeasure and 1 data symbol after each consecutive SSB symbols indicated by the SSB-ToMeasure, given that SSB-ToMeasure is configured, and
        • not overlapped with received signal strength indicator, RSSI, symbols indicated by an ss-RSSI-Measurement and 1 data symbol before each RSSI symbol indicated by the ss-RSSI-Measurement and 1 data symbol after each RSSI symbol indicated by the ss-RSSIMeasurement, given that ss-RSSI-Measurement is configured;

    wherein otherwise there is an actual overlap.

11. The user equipment (120) of any of claims 1 to 10, wherein the means are further configured to perform:

   detecting that the radio quality value changes such that the predetermined condition is no longer met; and
   in response to the detection, determining the evaluation period requirement based on whether or not there is an actual overlap between the resources.

12. The user equipment (120) of claim 11, wherein the means are further configured to perform:

   determining that there is an overlap between the resources; and
   based on the determination that there is an overlap, setting a relaxation factor P to larger than 1, wherein P is applied in determining the evaluation period requirement.

13. The user equipment (120) of any of claims 1 to 12, wherein the at least one resource for the first type of measurement comprises a channel state information reference signal and/or a reference signal carried in a synchronization signal block, and the at least one resource for the second type of measurement comprises a reference signal carried in a synchronization signal block.

14. A method performed by a user equipment (120), the method comprising:

   measuring (400) a radio quality value;
   detecting (402) that the radio quality value meets a predetermined condition;
   deriving (404), based on the detection, an assumption that there is no overlap between at least one resource for a first type of measurement and at least one resource for a second type of measurement; and
   determining (406), based on the assumption, an evaluation period requirement for the first type of measurement.

15. A computer program product comprising program instructions which, when executed by a user equipment, execute the method according to claim 14.


**Patentansprüche**

1. Teilnehmereinrichtung (120), die Mittel zum Durchführen von Folgendem umfasst:

   Messen (400) eines Funkqualitätswertes;
   Detektieren (402), dass der Funkqualitätswert eine vorbestimmte Bedingung erfüllt;
   Ableiten (404) einer Annahme, dass es zwischen mindestens einer Ressource für eine erste Art der Messung und mindestens einer Ressource für eine zweite Art der Messung keine Überlappung gibt, auf Basis der Detektion; und
   Bestimmen (406) einer Beurteilungsperiodenanforderung für die erste Art der Messung auf Basis der Annahme.

2. Teilnehmereinrichtung (120) nach Anspruch 1, wobei die Mittel ferner dazu ausgelegt sind, die vorbestimmte Bedingung von einem Netzwerk zu erfassen.

3. Teilnehmereinrichtung (120) nach einem der Ansprüche 1 bis 2, wobei die vorbestimmte Bedingung es erfordert, dass der Funkqualitätswert über einem vorbestimmten Qualitätsschwellwert liegt.

4. Teilnehmereinrichtung (120) nach Anspruch 3, wobei der vorbestimmte Qualitätsschwellwert einen Parameter s-MeasureConfig umfasst, und der Funkqualitätswert eine Referenzsignalempfangsleistung umfasst.

5. Teilnehmereinrichtung (120) nach einem der Ansprüche 1 bis 4, wobei die vorbestimmte Bedingung definiert, ob die Teilnehmereinrichtung (120) mindestens eine Zelle (102) messen muss, die einer aktuellen bedienenden Zelle (100) benachbart ist, oder nicht.

6. Teilnehmereinrichtung (120) nach einem der Ansprüche 1 bis 5, wobei die erste Art der Messung mindestens eines von Folgendem umfasst: Messungen für eine Funkverbindungsüberwachung oder Messungen für eine Strahlausfalldetektion.

7. Teilnehmereinrichtung (120) nach einem der Ansprüche 1 bis 6, wobei die zweite Art der Messung Messungen für eine Funkressourcenverwaltung umfasst.

8. Teilnehmereinrichtung (120) nach einem der Ansprüche 1 bis 7, wobei die Annahme, dass es zwischen den Ressourcen keine Überlappung gibt, das Einstellen eines Entspannungsfaktors P auf 1 veranlasst, wobei P beim Bestimmen der Beurteilungsperiodenanforderung angewandt wird.

9. Teilnehmereinrichtung (120) nach einem der Ansprüche 1 bis 8, wobei die Annahme, dass es zwischen den Ressourcen keine Überlappung gibt, ferner von einer Detektion abhängig ist, dass keine Messlücken ausgelegt sind, die sich mit den Ressourcen überlappen.

10. Teilnehmereinrichtung (120) nach einem der Ansprüche 1 bis 9, wobei:

es keine tatsächliche Überlappung zwischen den Ressourcen gibt, wenn die mindestens eine Ressource für die erste Art der Messung außerhalb einer Messlücke liegt und:

• nicht mit Synchronisationssignalblock(SSB)-Symbolen überlappt, die von einem SSB-ToMeasure angezeigt werden, und 1 Datensymbol vor jedem aufeinanderfolgenden SSB-Symbolen, die vom SSB-ToMeasure angezeigt werden, und 1 Datensymbol nach jedem aufeinanderfolgenden SSB-Symbolen, die vom SSB-ToMeasure angezeigt werden, unter der Vorgabe, dass SSB-ToMeasure ausgelegt ist, und
• nicht mit Empfangssignalstärkeindikator(RSSI)-Symbolen überlappt, die von einem ss-RSSI-Measurement angezeigt werden, und 1 Datensymbol vor jedem RSSI-Symbol, das vom ss-RSSI-Measurement angezeigt wird und 1 Datensymbol nach jedem RSSI-Symbol, das vom ss-RSSIMeasurement angezeigt wird, unter der Vorgabe, dass ss-RSSI-Measurement ausgelegt ist;

wobei es andernfalls keine tatsächliche Überlappung gibt.

11. Teilnehmereinrichtung (120) nach einem der Ansprüche 1 bis 10, wobei die Mittel ferner dazu ausgelegt sind, Folgendes durchzuführen:

Detektieren, dass sich der Funkqualitätswert derart ändert, dass die vorbestimmte Bedingung nicht mehr erfüllt ist; und
Bestimmen der Beurteilungsperiodenanforderung darauf basierend, ob es zwischen den Ressourcen eine tatsächliche Überlappung gibt oder nicht, in Reaktion auf die Detektion.

12. Teilnehmereinrichtung (120) nach Anspruch 11, wobei die Mittel ferner dazu ausgelegt sind, Folgendes durchzuführen:

Bestimmen, dass es zwischen den Ressourcen eine Überlappung gibt; und
Einstellen eines Entspannungsfaktors P auf größer als 1 auf Basis der Bestimmung, dass es eine Überlappung gibt, wobei P beim Bestimmen der Beurteilungsperiodenanforderung angewandt wird.

13. Teilnehmereinrichtung (120) nach einem der Ansprüche 1 bis 12, wobei die mindestens eine Ressource für die erste Art der Messung ein Kanalzustandsinformationsreferenzsignal und/oder ein Referenzsignal umfasst, das in einem Synchronisationssignalblock transportiert wird, und die mindestens eine Ressource der zweiten Art der Messung ein Referenzsignal umfasst, das in einem Synchronisationssignalblock transportiert wird.

14. Verfahren, das von einer Teilnehmereinrichtung (120) durchgeführt wird, wobei das Verfahren Folgendes umfasst:

Messen (400) eines Funkqualitätswertes;
Detektieren (402), dass der Funkqualitätswert eine vorbestimmte Bedingung erfüllt;
Ableiten (404) einer Annahme, dass es zwischen mindestens einer Ressource für eine erste Art der Messung und mindestens einer Ressource für eine zweite Art der Messung keine Überlappung gibt, auf Basis der Detektion; und
Bestimmen (406) einer Beurteilungsperiodenanforderung für die erste Art der Messung auf Basis der Annahme.

15. Computerprogrammprodukt, das Programmanweisungen umfasst, die, wenn sie von einer Teilnehmereinrichtung ausgeführt werden, das Verfahren gemäß Anspruch 14 ausführen.

**Revendications**

1. Équipement utilisateur (120), comprenant des moyens pour effectuer ce qui suit :

    mesurer (400) une valeur de qualité radio ;
    détecter (402) que la valeur de qualité radio satisfait à une condition prédéterminée ;
    sur la base de la détection, déduire (404) une hypothèse selon laquelle il n'y a pas de chevauchement entre au moins une ressource pour un premier type de mesure et au moins une ressource pour un deuxième type de mesure ; et
    sur la base de l'hypothèse, déterminer (406) une exigence de période d'évaluation pour le premier type de mesure.

2. Équipement utilisateur (120) selon la revendication 1, dans lequel les moyens sont en outre configurés pour acquérir la condition prédéterminée à partir d'un réseau.

3. Équipement utilisateur (120) selon les revendications 1 et 2, dans lequel la condition prédéterminée exige que la valeur de qualité radio soit au-dessus d'un seuil de qualité prédéterminé.

4. Équipement utilisateur (120) selon la revendication 3, dans lequel le seuil de qualité prédéterminé comprend un paramètre de s-MeasureConfig, et la valeur de qualité radio comprend une puissance reçue de signal de référence.

5. Équipement utilisateur (120) selon les revendications 1 à 4, dans lequel la condition prédéterminée définit si l'équipement utilisateur (120) doit ou non mesurer au moins une cellule (102) voisine d'une cellule de desserte (100) actuelle.

6. Équipement utilisateur (120) selon les revendications 1 à 5, dans lequel le premier type de mesure comprend au moins des mesures parmi : des mesures pour une surveillance de liaison radio, ou des mesures pour une détection d'échec de faisceau.

7. Équipement utilisateur (120) selon les revendications 1 à 6, dans lequel le deuxième type de mesure comprend des mesures pour une gestion de ressources radio.

8. Équipement utilisateur (120) selon les revendications 1 à 7, dans lequel l'hypothèse selon laquelle il n'y a pas de chevauchement entre les ressources entraîne la définition d'un facteur de relaxation P à 1, dans lequel P est appliqué dans la détermination de l'exigence de période d'évaluation.

9. Équipement utilisateur (120) selon les revendications 1 à 8, dans lequel l'hypothèse selon laquelle il n'y a pas de chevauchement entre les ressources dépend en outre d'une détection qu'il n'y a pas d'intervalles de mesure configurés qui se chevauchent avec les ressources.

10. Équipement utilisateur (120) selon les revendications 1 à 9, dans lequel :

    il n'y a pas de chevauchement réel entre les ressources si l'au moins une ressource pour le premier type de mesure est en dehors d'un intervalle de mesure et :

       • pas de chevauchement avec des symboles de bloc de signal de synchronisation, SSB, indiqués par SSB-ToMeasure et 1 symbole de données avant chacun des symboles SSB consécutifs indiqué par SSB-ToMeasure et 1 symbole de données après chacun des symboles SSB consécutifs indiqué par SSB-ToMeasure, étant donné que SSB-ToMeasure est configurée, et
       • pas de chevauchement avec des symboles d'indicateur de force de signal reçu, RSSI, indiqués par ss-RSSI-Measurement et 1 symbole de données avant chaque symbole RSSI indiqué par ss-RSSI-Measurement et 1 symbole de données après chaque symbole RSSI indiqué par ss-RSSI-Measurement, étant donné que ss-RSSI-Measurement est configurée ;

    dans lequel dans le cas contraire, il y a un chevauchement réel.

11. Équipement utilisateur (120) selon les revendications 1 à 10, dans lequel les moyens sont en outre configurés pour effectuer ce qui suit :

détecter que la valeur de qualité radio change de sorte que la condition prédéterminée ne soit plus satisfaite ; et en réponse à la détection, déterminer l'exigence de période d'évaluation selon qu'il y a ou non un chevauchement réel entre les ressources.

**12.** Équipement utilisateur (120) selon la revendication 11, dans lequel les moyens sont en outre configurés pour effectuer ce qui suit :

déterminer qu'il y a un chevauchement entre les ressources ; et
sur la base de la détermination selon laquelle il y a un chevauchement, définir un facteur de relaxation P pour qu'il soit supérieur à 1, dans lequel P est appliqué dans la détermination de l'exigence de période d'évaluation.

**13.** Équipement utilisateur (120) selon les revendications 1 à 12, dans lequel l'au moins une ressource pour le premier type de mesure comprend un signal de référence d'informations d'état de canal et/ou un signal de référence transporté dans un bloc de signal de synchronisation, et l'au moins une ressource pour le deuxième type de mesure comprend un signal de référence transporté dans un bloc de signal de synchronisation.

**14.** Procédé réalisé par un équipement utilisateur (120), le procédé comprenant les étapes suivantes :

mesurer (400) une valeur de qualité radio ;
détecter (402) que la valeur de qualité radio satisfait à une condition prédéterminée ;
sur la base de la détection, déduire (404) une hypothèse selon laquelle il n'y a pas de chevauchement entre au moins une ressource pour un premier type de mesure et au moins une ressource pour un deuxième type de mesure ; et
sur la base de l'hypothèse, déterminer (406) une exigence de période d'évaluation pour le premier type de mesure.

**15.** Produit de programme informatique comprenant des instructions de programme qui, lorsqu'elles sont exécutées par un équipement utilisateur, exécutent le procédé selon la revendication 14.

FIG. 1

FIG. 2A

FIG. 2B

FIG. 2C

T_EVALUATE

T_EVALUATE

T_EVALUATE

TIME

RLM-RS
MEAS.
PERIODICITY

MEAS. SAMPLE OF
RLM-RS RESOURCES
(=SSB/CSI-RS)

T_IND.INTERVAL

= L1 INDICATION

FIG. 3

400: MEASURE A RADIO QUALITY VALUE

402: DETECT THAT THE RADIO QUALITY VALUE MEETS A PREDETERMINED CONDITION

404: DERIVE, BASED ON THE DETECTION, AN ASSUMPTION THAT THERE IS
NO OVERLAP BETWEEN AT LEAST ONE RESOURCE FOR A FIRST TYPE OF MEASUREMENT
AND AT LEAST ONE RESOURCE FOR A SECOND TYPE OF MEASUREMENT

406: DETERMINE AN EVALUATION PERIOD REQUIREMENT FOR
THE FIRST TYPE OF MEASUREMENT BASED ON THE ASSUMPTION

FIG. 4

FIG. 5A

FIG. 5B

EP 4 068 835 B1

FIG. 5C

EP 4 068 835 B1

FIG. 6

FIG. 7

FIG. 8

**EP 4 068 835 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2019349797 A

**Non-patent literature cited in the description**

- *3GPP TS 38.300*, December 2020
- *TS 38.133*, December 2020